# EUROPEAN PATENT APPLICATION

(11) **EP 3 184 936 A1**
(43) Date of publication of application: **28.06.2017**
(21) Application number: 15460132.2
(22) Date of filing: 23.12.2015
(51) Int. Cl.: F25B 13/00, F25B 49/02, F25B 27/00, F25B 43/00, F25B 30/06, F25B 41/00, F25B 41/04

(54) **GROUND SOURCE HEAT PUMP SYSTEM WITH A COOLING FUNCTION**

(71) Applicant: EKOMATIC Spolka Cywilna, 66-400 Gorzow Wielkopolski (PL)
(72) Inventor: GRECH, Radoslaw, 65-101 Zielona Gora (PL); KACPERSKI, Dawid, 60-080 Lusowo (PL)

(57) **Abstract**

The invention relates to a ground source heat pump system with a cooling function containing a lower heat source, heat and cold exchangers, equipped with an automatic regulation and control system, a fan and devices for reversing the refrigerant flow direction, characterized in that in the proper circuit of the heat pump an evaporator (3) is connected via pipes on the one side with the lower heat source in the form of a ground heat exchanger (1) supplied with glycol drawn in by a circulation pump (10), and on the other side, via a 4-way valve (4), with a compressor (5), connected via the same 4-way valve (4) with a condenser (6) operating in tandem with a fan (7), transferring heat directly to the rooms and connected via an expansion valve (8,9) with an evaporator (3), wherein for the heating function the refrigerant is routed from the compressor (5) via the 4-way valve to the condenser (6) and then to the filter (11), sight-glass (12) and via the expansion valve to the evaporator (3), from which it goes to the 4-way valve (4) and to the compressor (5) whereas for the cooling function the refrigerant from the compressor goes via the 4-way valve (4) to the evaporator (3), then to the filter (11), sight glass (12) and via the expansion valve (9) to the condenser (6), and next it is directed back via the 4-way valve (4) to the compressor (5).

## Description

The invention relates to a ground source heat pump system with a cooling function.

Basically, a heat pump consists of four components: a compressor, a condenser - a heat exchanger giving off heat to the surroundings, a throttle/expansion valve and an evaporator - a heat exchanger receiving heat.
The operation of a typical heat pump can be divided into three so-called circuits: a lower source circuit, a proper circuit (the heat pump) and an upper source circuit. Similarly to cooling equipment, in a heat pump there is a flow of refrigerant such as glycol or brine. In the lower source circuit the refrigerant flows into the **evaporator** where it is brought to boiling and evaporates, taking heat from environment. Next, it goes into the **compressor** (proper circuit) powered by electricity - a sudden increase of pressure and temperature of the medium occurs (approx. 90°C). In the form of superheated steam, it flows into the **condenser** where it condenses, changing its physical state to liquid - giving off heat to the heating system of the building. The cooled medium flows to the **expansion (throttle) valve** where the pressure is reduced and where, as a result of sudden pressure drop, it is chilled rapidly. The medium is now colder than the source from which it receives heat, i.e. ground, water or air. The medium goes to the evaporator and the cycle begins again. The evaporator receives heat from the lower source while the condenser transfers it to the upper source - the heating system.
In the summer a reversed process is possible, in particular in air pumps, so that they work as air conditioners receiving heat from the house and transferring it to the outside.
Known compressor-based heat pumps contain heat exchangers, an upper heat source, namely a condenser, and a lower heat source, namely an evaporator, a compressor and an expansion valve, the evaporator's and condenser's fans and multi-way valves to change a direction of the refrigerant circulation. These systems are equipped with devices and systems for automatic regulation and control of the system operation. The air from the fans is routed directly to the condenser and the evaporator and the direction of the air stream is fixed.
The basic division criterion of heat pumps is the system of operation, depending on the way in which the equipment receives heat through the lower source from the surroundings. The main types of heat pump systems, depending on the lower source, i.e. the environment from which they receive heat, which can include air, water or ground, are as follows:
- the glycol-water system with vertical probes
- the glycol water system with a horizontal collector
- the water-water system based on two wells
- the air-water system
- the air-air system.
As regards glycol-water pumps, the pump forces circulation of the glycol or brine solution which fills the vertical probes and horizontal collectors. The solution receives heat or cold from the ground, air or water and carries the collected energy to the evaporator of the heat pump. In the evaporator there is a refrigerant which receives heat from the glycol solution, after which this medium flows to the evaporator and there it transfers the heat to the heating system, while the cooled glycol solution returns to the ground system and the entire cycle begins again.
In traditional glycol pumps the upper source of heat is water. In the case of heat pumps using heat from the ground, a special system called a ground heat exchanger (GHC) is needed to transfer heat to the pump evaporator. Pumps of this type require the use of vertical or horizontal ground collectors.
Also known are ground heat exchangers. i.e. devices used to aid building Ventilation, improving their thermal comfort through standardizing the temperature of the air supplied to the building. In the ground heat exchanger the large heat capacity of the ground is used, thanks to which variations of temperature of the air supplied to the building can be reduced (in comparison with the air drawn directly from the atmosphere). The system is used for preheating (in winter) or cooling (during summer) of the air introduced to buildings. Most often, it is a system connected with a mechanical ventilation of the building and a recovery unit, an air heating system, for example a heat pump.
On the other hand, in traditional air conditioning, in the cooling part of the air-conditioner, the evaporator provides evaporation of the refrigerant using the heat gains obtained from the room. Then the refrigerant in a vaporized state flows to the compressor where, as a result of compression, its pressure rises and temperature increases from 60 to 100°C. Hot vapors are then routed to the evaporator where they cool down and condense, and next, already as liquid, it flows through conduits to the expansion valve. At that point, there is a significant reduction of the liquid temperature and pressure. Further on, the liquid medium goes to the evaporator and the entire cycle is repeated.
The hitherto known solutions pertaining to ground source heat pump systems do not ensure direct heat transport from the ground to the rooms inside the building without the need to use the upper heat source of the heat pump, nor do they provide cooling of the rooms in such an arrangement.
The purpose of the solution is to ensure the room heating and cooling function as well as to simplify the installation of a ground source heat pump.

A ground source heat pump system with a cooling function containing a lower heat source, heat and cold exchangers, equipped with an automatic regulation and control system, a fan and devices for reversing the refrigerant flow direction,
characterized, according to the invention, in that in the proper circuit of the heat pump an evaporator is connected via pipes on the one side with the lower heat source in the form of a ground heat exchanger supplied with glycol drawn in by a circulation pump, and on the other side, via a 4-way valve, with a compressor, connected via the same 4-way valve with a condenser operating jointly with a fan transferring heat directly to the rooms and connected via an expansion valve with the evaporator, wherein for the heating function the refrigerant is routed from the compressor via the 4-way valve to the condenser, and then through the filter, sight-glass and expansion valve to the evaporator, from which it goes to the 4-way valve and to the compressor whereas for the cooling function the refrigerant from the compressor goes through the 4-way valve to the evaporator, then to the filter, sight glass and expansion valve to the condenser, and next back via the 4-way valve to the compressor.
The ground source heat pump system with a cooling function is provided with an automatic control system. The automatic control system contains a PLC controller communicating by wire with the operator panel.
In the ground source heat pump system with the cooling function according to the invention there is no water system as the upper heat receiver of the heat pump, therefore floor heating or radiators are not necessary, while the solution differs from the available air conditioners by the stable lower source, consisting of a ground heat exchanger supplied with glycol. Such a system does not have an external air unit.
The solution according to the invention makes it possible to direct the refrigerant in the form of glycol from the lower source in the form of drilled wells connected into a central supply system, drawn in with the circulation pump to the condenser, and then, via the 4-way valve:
- if the pump operates as a heat pump, to the compressor where the power parameters such as temperature and pressure of the operating gas are increased, and then to the evaporator;
- if it provides the cooling function, from the condenser directly to the evaporator, where the refrigerant is evaporated and cooled down.

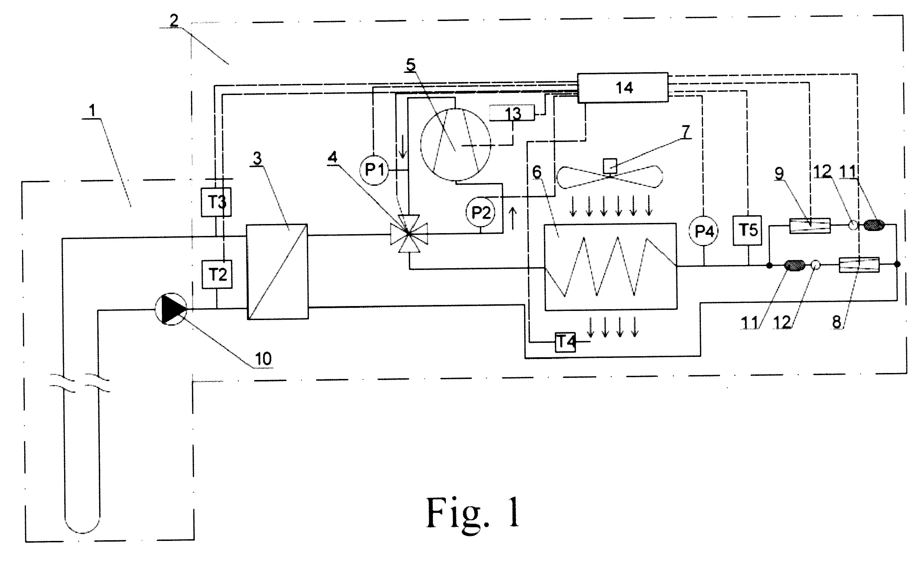

The invention is shown in the drawing, where Fig. 1 presents a schematic view of the ground source heat pump system with a cooling function.
The ground source heat pump system, according to the invention, contains a vertical ground heat exchanger 1, a heat pump 2 equipped with a heat exchanger - evaporator 3, a 4-way valve 4, a compressor 5, a heat exchanger - condenser 6, a fan 7 and two automatic expansion valves 8,9.
The ground source heat pump system is provided with a lower heat source circuit and a proper circuit. The source of heat and cold is the ground heat exchanger 1. Glycol from the lower source is sent to the evaporator 3 where it gives off heat to the gas circulating on the other side of the evaporator 3. The gas circuit is closed. In the evaporator 3 the pressure and temperature of the gas are increased and in the condenser 6 the heat is received by means of the air blown through the fan 7 and both its pressure and temperature drop.
In the proper circuit, the evaporator 3 is connected via pipes on the one side with the ground heat exchanger 1 supplied with glycol drawn in with the circulating pump 10, and on the other side via the 4-way valve 4 with the compressor 5, connected with the condenser 6 operating in tandem with the fan 7, transferring heat directly to the rooms, and connected through the expansion valve 8,9 with the evaporator 3. The electrically powered fan 7, operating in tandem with the condenser 6, draws air from the room and after heating or cooling, depending on the selected heating or cooling function, gives it off to the target room.
The lower heat source of the heat pump in the form of a vertical ground heat exchanger 1 is connected via a Ø 18 copper conduit with the evaporator 3 placed inside the housing of the heat pump 2. The circuit is equipped with two temperature sensors T2 and T3, and the medium carrying energy from the lower source to the primary circuit of the evaporator is glycol. The heating or cooling function depends on which of the expansion valves 8,9 is open.
For the heating function, the circulation of the refrigerant, starting from the compressor 5, is directed via the 4-way valve 4 to the condenser 6, then to the filter 11; sight glass 12, and through the expansion valve 8 to the evaporator 3, from which it goes back to the 4-way valve 4 and is routed to the compressor 5 after which the refrigerant circuit is closed. For the heating function the expansion valve 9 is closed in this circuit.
In the cooling function the heated refrigerant from the compressor 5 goes via the 4-way valve 4 to the evaporator 3, then to the filter 11, sight-glass 12 and through the expansion valve 9 to the condenser 6, after which it is directed back through the 4-way expansion valve 4 to the compressor 5. For the cooling function the expansion valve 8 is closed in this circuit.
The condenser 6, based on a fin exchanger, receives air from the fan 7 and the air after heating or cooling is distributed in the target room.
The equipment is connected by means of Ø 12 and Ø 10 copper pipes, depending on the diameters of inlet pipes to the equipment, soldered with hard solder, while the gaseous refrigerant circulates inside.
Electrical energy is provided to the compressor 5 from the power grid using an inverter 13 controlling the operation of the compressor 5. The fan 7 is supplied from the power grid.
Depending on whether a heating or cooling function is required, the entire system is controlled using a PLC controller 14 communicating by wire with the wall-mounted operator panel, not shown in the drawing) inside the heated or cooled room. The PLC controller also provides the equipment with a safe operation mode by communicating with the temperature and pressure measurement systems inside the pump.

## Claims

1. A ground source heat pump system with a cooling function containing a lower heat source, heat and cold exchangers, equipped with an automatic regulation and control system, a fan and devices for reversing the refrigerant flow direction, **characterized in that**
in the proper circuit of the heat pump an evaporator (3) is connected via pipes on the one side with the lower heat source in the form of a ground heat exchanger (1) supplied with glycol drawn in by a circulation pump (10), and on the other side, via a 4-way valve (4), with a compressor (5), connected via the same 4-way valve (4) with a condenser (6) operating in tandem with a fan (7), transferring heat directly to the rooms and connected via an expansion valve (8,9) with an evaporator (3), wherein for the heating function the refrigerant is routed from the compressor (5) via the 4-way valve to the condenser (6) and then to the filter (11), sight-glass (12) and via the expansion valve to the evaporator (3), from which it goes to the 4-way valve (4) and to the compressor (5) whereas for the cooling function the refrigerant from the compressor goes via the 4-way valve (4) to the evaporator (3), then to the filter (11), sight glass (12) and via the expansion valve (9) to the condenser (6), and next it is directed back via the 4-way valve (4) to the compressor (5).

2. The ground source heat pump system with a cooling function according to claim 1, **characterized in that** it is equipped with an automatic control system.

3. The ground source heat pump system with a cooling function according to claim 2, **characterized in that** the automatic control system contains a PLC controller (14) communicating by wire with the operating panel.
